# FASCICULE DE BREVET EUROPEEN

(11) **EP 1 126 358 B1**
(45) Date de publication et mention de la délivrance du brevet: **06.04.2005**
(21) Numéro de dépôt: 01410019.2
(22) Date de dépôt: 15.02.2001
(51) Int. Cl.: G06F 1/00, G08B 13/12

(54) **Dispositif anti-intrusion**
Einbruchhemmende Vorrichtung
Anti-intrusion device

(30) Priorité: 15.02.2000 FR 0001840
(43) Date de publication de la demande: 22.08.2001
(73) Titulaire: ASCOM MONETEL S.A., 07500 Guilherand-Granges (FR)
(72) Inventeur: Soubirane, Alain, 26500 Bourg-Les-Valence (FR)
(74) Mandataire: de Beaumont, Michel

(56) Documents cités:
- DE-A- 19 705 518
- DE-U- 9 105 960
- GB-A- 2 297 540
- US-A- 5 539 379

## Description

La présente invention concerne un dispositif anti-intrusion destiné à protéger une surface par laquelle il serait possible d'accéder à des objets, par exemple des circuits électroniques, de façon à éviter que l'on ait accès auxdits objets ou à des informations contenues dans lesdits objets.

Les systèmes de sécurité actuels sont basés sur des matériaux durs, par exemple à base de nouvelles résines thermodurcissables de type polyester ou époxy, et de plaques d'aciers. On utilise en plus des fils métalliques conducteurs placés dans les parois à protéger et dont on mesure en permanence la résistance électrique de manière à pouvoir détecter une intrusion brutale entraînant la coupure de ces fils conducteurs.

Un inconvénient de cette solution de l'art antérieur, vient de son coût élevé.

Un autre inconvénient de l'art antérieur est son encombrement. Pour l'utiliser sur des produits de petite taille, on est contraint de réduire l'épaisseur des parois mais une intrusion par pelage (on dit aussi par délaminage), qui consiste à enlever le matériau de la paroi par fines couches successives, permet d'atteindre le fil métallique puis de le traverser sans le détériorer et donc sans être détecté et de continuer à percer jusqu'aux objets recherchés.

Un autre inconvénient de l'art antérieur vient du fait que des systèmes de radiographie peuvent suffire à indiquer la position du fil conducteur. Des micro-ouvertures peuvent alors permettre de le traverser en l'évitant et sans être détecté.

Un autre inconvénient de l'art antérieur est qu'il est inadapté aux appareils électroniques ayant des parties en relation avec le monde extérieur comme des connexions, des claviers, des afficheurs... Par exemple, l'art antérieur ne convient pas aux appareils destinés au traitement des cartes à puces, pour faire du paiement. Ces appareils ont la particularité d'avoir de nombreuses relations avec l'extérieur tout en nécessitant des garanties de sécurité importantes, tant pour les données stockées dans l'appareil que pour les données échangées. Il faut notamment assurer la sécurité de la phase de saisie d'identification dont le fonctionnement classique est le suivant : un code d'identification (code PIN) est saisi par le clavier puis dirigé vers un microprocesseur qui dirige les opérations, pendant que simultanément, l'afficheur témoigne de la saisie de chaque donnée confidentielle par l'affichage d'un caractère anonyme, permettant ainsi de contrôler de l'extérieur le bon déroulement de la procédure et de repérer tout dysfonctionnement éventuel des touches du clavier. Pour garantir la sécurité de ce procédé de saisie d'identification dans ce schéma de fonctionnement, il est nécessaire de protéger au moins le clavier, le microprocesseur, l'afficheur et les circuits électriques reliant ces trois éléments. L'art antérieur n'apporte qu'une solution partielle puisqu'il ne permet pas de protéger totalement le clavier et l'afficheur.

Un autre inconvénient d'un dispositif de sécurité selon l'art antérieur vient du fait qu'il faut le prévoir dès la conception d'un produit ; il ne peut être que très difficilement ajouté sur un produit déjà existant. C'est pourquoi, si on souhaite ajouter l'option de paiement sécurisé à un appareil électronique comme un ordinateur portable par exemple, on utilise aujourd'hui un clavier de sécurité se connectant sur l'ordinateur pour réaliser la saisie du code d'identification PIN. Il y a donc besoin d'un nouvel appareil. Cela représente un inconvénient important car l'emploi de la carte à puces pour des échanges de données confidentielles est de plus en plus fréquent et concerne de plus en plus d'appareils électroniques.

Un objet de la présente invention est de prévoir un nouveau dispositif moins cher que ceux de l'art antérieur pour protéger toute surface ou tout volume contenant des objets de valeur ou des données confidentielles.

Un autre objet de la présente invention est de prévoir un dispositif particulièrement adapté aux appareils devant saisir des données confidentielles et notamment ceux possédant des claviers et des afficheurs comme les terminaux de paiement par carte.

Un autre objet de la présente invention est de prévoir un dispositif de traitement des cartes s'ajoutant facilement sur des appareils de communication existants tout en garantissant la sécurité maximale.

Un autre objet de la présente invention est de prévoir un dispositif peu volumineux puisqu'un grand nombre d'appareils sont portables et que l'orientation du marché est une miniaturisation toujours plus importante.

Enfin, un autre objet de la présente invention est de prévoir un dispositif adapté à des applications dans des conditions extrêmes, et garantissant notamment l'étanchéité à la poussière et aux liquides des appareils sur lesquels il est utilisé.

Ainsi, la présente invention prévoit un dispositif anti-intrusion comprenant un circuit conducteur placé sur une surface à protéger et un moyen de mesure d'une caractéristique électrique associée audit circuit conducteur et apte à réagir en cas de modifications desdites caractéristiques électriques, dans lequel le circuit conducteur est réalisé à l'encre conductrice.

Selon un mode de réalisation de la présente invention, le circuit conducteur comprend un premier élément de circuit conducteur placé sur la surface à protéger et un deuxième élément de circuit conducteur placé au-dessus dudit premier élément et séparé de celui-ci par une couche isolante munie d'un pont conducteur reliant électriquement les deux éléments de circuit conducteur.

Selon un mode de réalisation de la présente invention, le circuit conducteur est en partie ou en totalité appliqué sur une membrane souple destinée à être fixée à la surface à protéger.

Selon un mode de réalisation de la présente invention, le dispositif anti-intrusion comprend deux membranes souples solidaires l'une de l'autre contenant chacune un élément de circuit conducteur sur une de leur face, et comprenant un pont conducteur pour effectuer une connexion électrique entre lesdits éléments de circuits de chacune des deux membranes.

Selon un mode de réalisation de la présente invention, le dispositif anti-intrusion est composé de plusieurs membranes souples de faible épaisseur comprenant des pistes conductrices sérigraphiées reliées entre elles par des ponts conducteurs réalisés à travers lesdites membranes de manière à former l'apparence d'une membrane souple unique, comprenant une barrière conductrice anti-intrusion tridimensionnelle.

Selon un mode de réalisation de la présente invention, le dispositif anti-intrusion est placé sur un élément à protéger, et comprend des contacts et une languette isolante attachée solidement audit élément à protéger par l'une de ses extrémités et dont l'autre extrémité peut occuper deux positions, la première intercalée entre lesdits contacts et la deuxième hors desdits contacts de manière à former un interrupteur apte à détecter la séparation dudit dispositif anti-intrusion et dudit élément à protéger.

Selon un mode de réalisation de la présente invention, le moyen de mesure d'une caractéristique électrique est placé à l'intérieur d'un volume au moins en partie protégé par le circuit conducteur.

Selon un mode de réalisation de la présente invention, le dispositif comprend une alimentation électrique placée à l'intérieur d'un volume au moins en partie protégé par le circuit conducteur.

Selon un mode de réalisation de la présente invention, le dispositif anti-intrusion contient un composant tel qu'un interrupteur, un afficheur ou un microprocesseur entre deux membranes souples.

Selon un mode de réalisation de la présente invention, le dispositif anti-intrusion comprend un moyen de saisie d'identification et un afficheur protégés par une barrière conductrice de protection et reliés à un moyen de gestion des fonctions de vérification d'identité placé à l'intérieur d'un volume protégé.

Selon un mode de réalisation de la présente invention, le dispositif anti-intrusion est placé sur un appareil, et le moyen de saisie d'identification est placé sur la face inférieure dudit appareil.

Selon un mode de réalisation de la présente invention, le dispositif de saisie de code confidentiel comprend un système anti-intrusion du type susmentionné et comprend une première membrane comportant une première piste conductrice anti-intrusion, une deuxième membrane comportant une seconde piste conductrice anti-intrusion reliée électriquement à ladite première piste anti-intrusion par un pont conducteur, un clavier membranaire dont les contacts sont placés en zone protégée entre lesdites pistes conductrices anti-intrusion.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente un premier mode de réalisation de l'invention,
les figures 2a et 2b représentent un second mode de réalisation de l'invention,
la figure 3 représente une vue en coupe de la combinaison d'un dispositif sécurisé selon l'invention avec un clavier et un afficheur,
la figure 4 représente en perspective vue de dessous le dispositif de la figure 3,
la figure 5 représente un dispositif de saisie de code confidentiel combiné avec le dispositif selon l'invention,
la figure 6 représente l'implantation dans un appareil électronique d'un dispositif tel que représenté à la figure 5,
les figures 7a et 7b représentent un interrupteur détecteur d'ouverture utilisé lors de l'implémentation d'un dispositif selon l'invention,
les figures 8a et 8b représentent l'application d'un dispositif selon l'invention à une carte à puce, et
la figure 9 représente l'application d'un dispositif selon l'invention à un coffre-fort.

De mêmes références désignent de mêmes éléments sur les différentes figures. Seuls les éléments susceptibles de faciliter la compréhension ont été représentés.

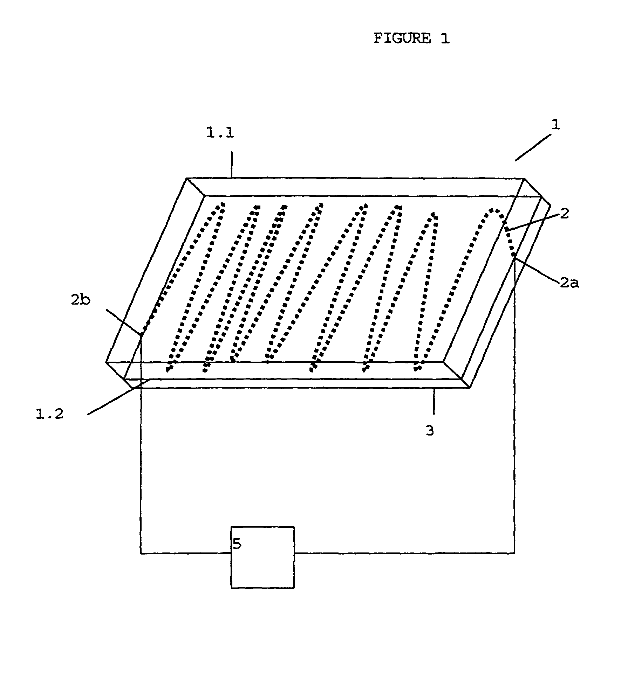

La figure 1 représente un dispositif anti-intrusion 1 le plus simple possible selon la présente invention. Elle représente une membrane souple de l'ordre de 0.1 mm d'épaisseur composée principalement d'un film en Kapton, polycarbonate ou polyuréthane de face supérieure 1.1 et dont la face inférieure 1.2 comporte une piste sérigraphiée 2 réalisée à l'encre conductrice et caractérisée par une certaine résistance électrique entre ses bornes 2a et 2b. Cette résistance est de l'ordre de 0.08 Ohms par millimètre de longueur pour des pistes de 0.5 mm de large et d'épaisseur standard 0.008 mm.

La piste conductrice anti-intrusion 2 est recouverte par un vernis isolant 3. L'ensemble représente une membrane anti-intrusion selon l'invention qui se colle à la surface d'un appareil à protéger.

Un dispositif logique 5 permet de vérifier, lors de scrutations permanentes s'il n'y a pas eu coupure de la piste 2. Simplement, on prévoit de connecter les bornes 2a et 2b du système anti-intrusion à deux entrées d'un microprocesseur 5 qui détectera une ouverture éventuelle du circuit 2. Le dispositif 5 utilisera alors un algorithme lui permettant de réagir à toute détection d'intrusion en effaçant par exemple rapidement des données confidentielles ou en déclenchant une alarme.

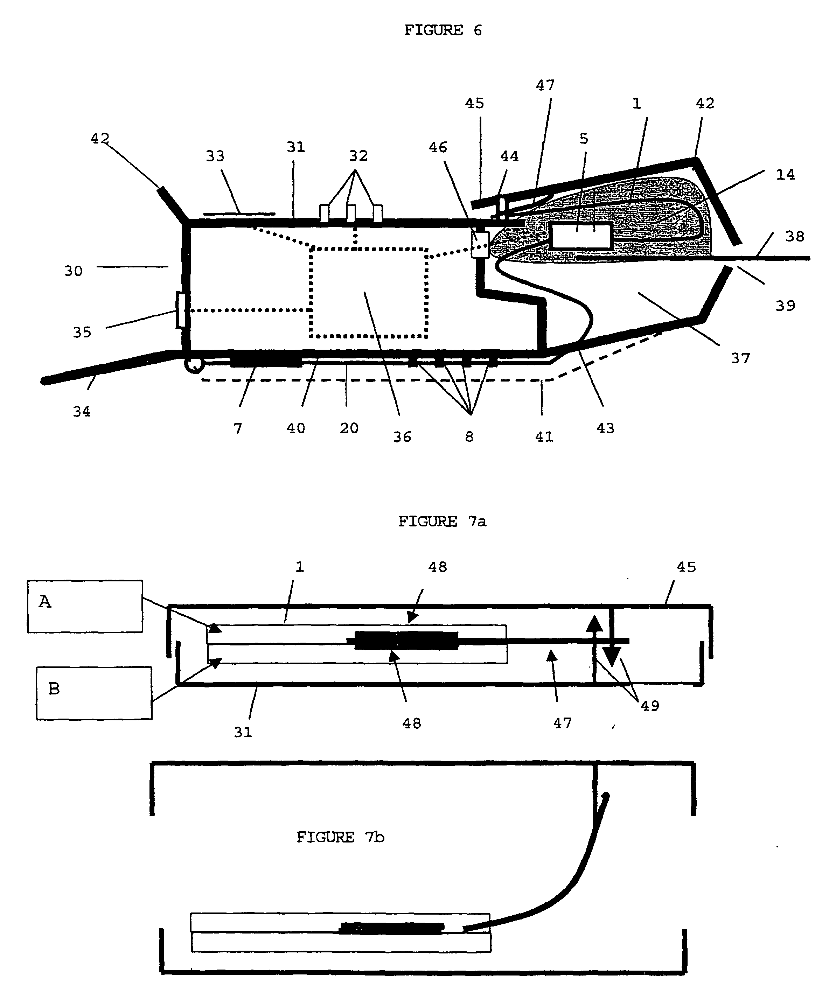

Principalement, deux solutions de montage d'un tel dispositif 1 sur un appareil à protéger sont possibles : soit la membrane recouvre toute la surface dudit appareil, soit uniquement une partie sensible. Dans ce second cas, on utilise alors des précautions pour éviter que la membrane puisse être décollée en ses extrémités, et notamment pour éviter qu'on puisse ainsi accéder aux bornes 2a et 2b ou au microprocesseur 5. Pour cela, on pourra noyer les extrémités de la membrane dans de la résine faisant corps avec l'appareil. On pourra aussi utiliser des interrupteurs détecteurs d'intrusion comme celui représenté aux figures 7a et 7b et décrit plus loin. Un exemple détaillé du montage d'un tel dispositif 1 est représenté sur la figure 6 décrite plus loin.

La membrane de sécurité étant définie et placée autour d'un appareil ou partie d'appareil, elle définit alors au sein de l'appareil une zone qu'on qualifie de protégée puisque toute intrusion y sera détectée. L'élément 5 étant indispensable à la gestion du dispositif, il est placé dans cette zone protégée ainsi qu'accessoirement son alimentation électrique.

Un avantage d'une telle membrane vient de son faible coût. On choisira un dessin de la piste 2 pour répartir l'encre sur la plus grande partie de la surface de la membrane, en insistant plus aux divers points correspondant aux positions les plus vulnérables sur l'appareil à protéger. La piste 2 occupera la plus grande surface possible de sorte que la probabilité de percer la membrane sans être détecté soit faible. On choisira une encre conductrice invisible à la majorité des systèmes de radiographies.

Un autre avantage de la membrane décrite est sa souplesse qui permet de l'adapter à un grand nombre de formes de surfaces, même non planes. Il est bien sûr toutefois possible d'utiliser une membrane plus épaisse et moins souple ou d'appliquer la piste sérigraphiée 2 directement sur la face intérieure de la carapace d'un appareil.

Un autre avantage de la finesse de la membrane décrite est qu'il est possible de superposer plusieurs de ces membranes pour augmenter la protection. Il faudra alors un ou plusieurs moyens 5 pour surveiller toutes les pistes 2.

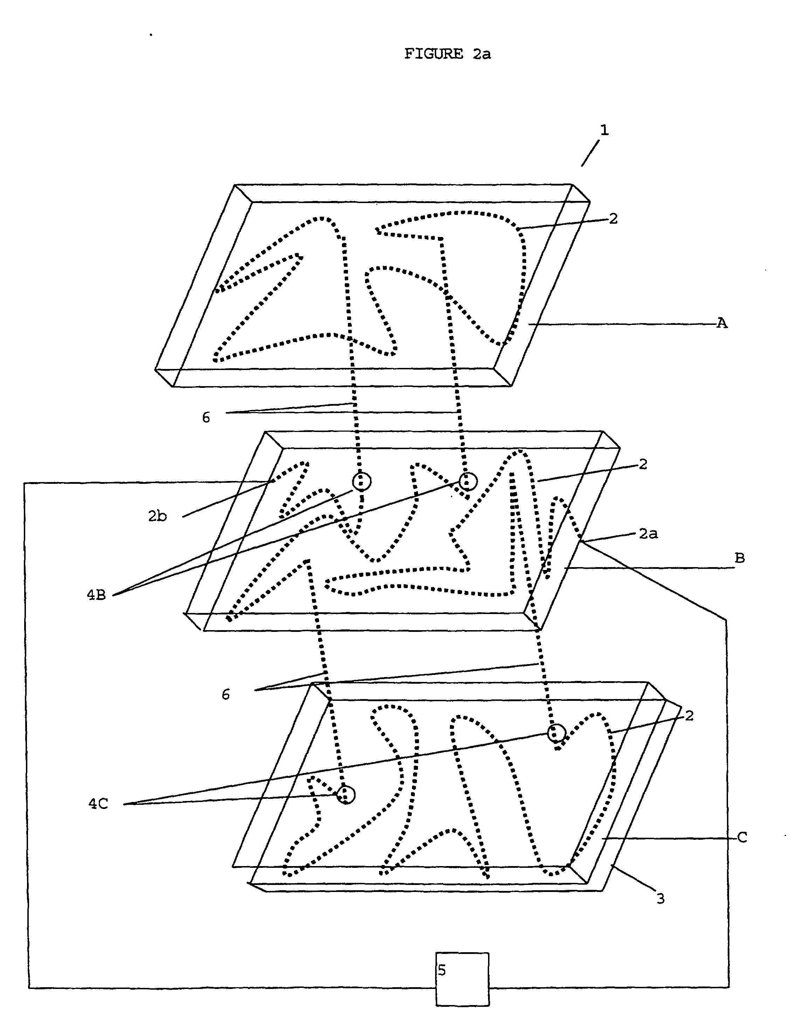

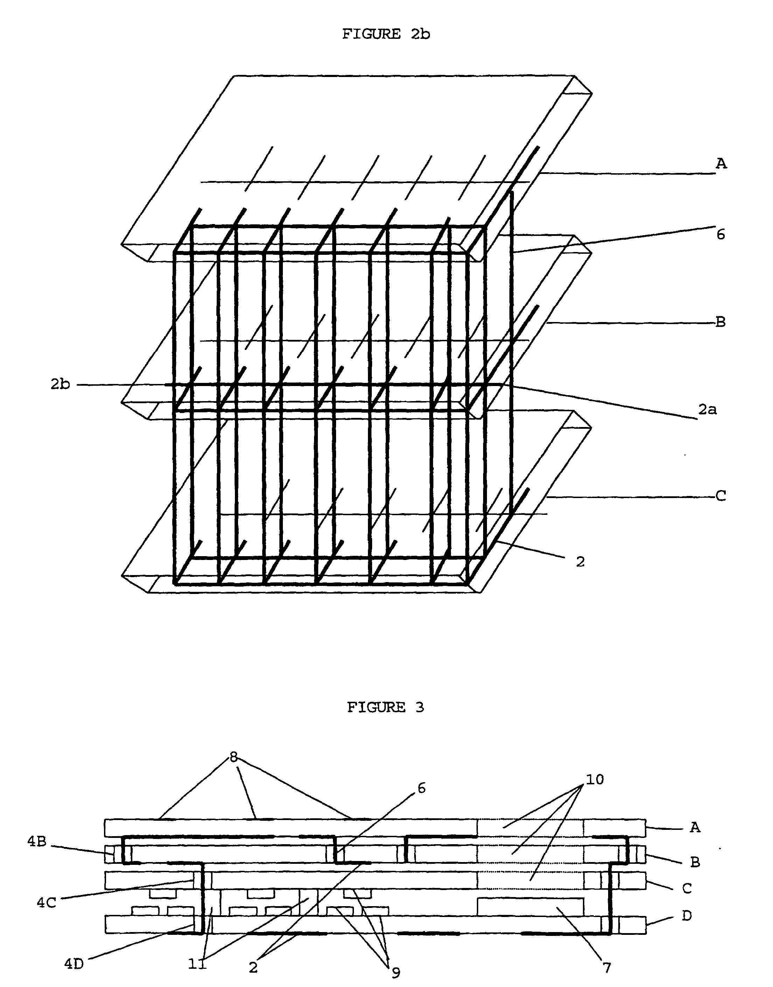

Les figures 2a et 2b représentent une seconde réalisation d'un dispositif anti-intrusion selon l'invention. Le dispositif 1 se compose de trois membranes telles que décrites précédemment, A, B et C, collées à l'aide de films autocollants double face (non représentés) les unes sur les autres. Pour la facilité de la représentation, ces membranes sont exagérément espacées sur les figures. Chaque membrane possède une piste conductrice 2 sur sa face inférieure. Ces pistes sont reliées entre elles par des ponts inter-membranes conducteurs 6, réalisés grâce à des trous traversants 4B et 4C pratiqués à travers les couches B et C et emplis d'encre conductrice composée par exemple de particules d'argent prises dans un substrat polymère ; l'ensemble forme ainsi une barrière conductrice en trois dimensions. Une rupture en un point quelconque de cette barrière électrique est détectée par le dispositif 5. L'espacement entre les différentes mailles conductrices est choisi pour limiter au mieux les intrusions. Ce dispositif 1 sera appliqué sur l'appareil à protéger de la même manière que précédemment.

La figure 2a représente une première forme possible de la barrière conductrice qui est une piste unique et continue entre les bornes 2a et 2b occupant les trois membranes A, B et C. Cette piste conductrice ne pourra prendre que deux états, « ouvert » ou « fermé » entre ses deux bornes, et il sera facile d'en connaître l'état.

La figure 2b représente une seconde forme possible de la barrière conductrice anti-intrusion. Celle-ci forme une grille en trois dimensions. Sa représentation électrique peut s'apparenter à un montage de résistances en parallèle. Ainsi, des coupures de cette grille entraîneront des variations plus faibles de résistance que dans le cas représenté à la figure 2a que l'homme du métier saura distinguer des autres faibles variations comme celles dues à la température par exemple.

On assemble les différentes couches par une matière adhésive isolante trouée au niveau des ponts conducteurs pour permettre le contact électrique. On peut aussi d'abord recouvrir les pistes 2 par un vernis isolant sauf au niveau des trous traversants puis coller les différentes membranes à l'aide d'une colle conductrice suffisamment fluide pour emplir les trous traversants.

Un tel dispositif anti-intrusion en trois dimensions est avantageux car il rend la probabilité encore plus faible de passer au travers de la barrière électrique sans être détecté, même par coupure avec un outil de faible dimension. De plus, il rend l'intrusion par pelage impossible puisqu'il est impossible de peler plus d'une couche sans couper les ponts 6 et être détecté.

La figure 3 représente en coupe la combinaison d'un clavier de saisie de code confidentiel ainsi qu'un afficheur avec un dispositif de sécurité selon la présente invention. Quatre membranes A, B, C et D sont fixées les unes sur les autres. La première membrane A comprend sur sa face supérieure un dessin 8 indiquant la position des touches du clavier. Elle comprend une ouverture 10 située au-dessus de l'afficheur 7. Les membranes A, B et D, comprennent sur leur face inférieure une piste sérigraphiée 2 à encre conductrice. Des ouvertures 4B réalisées dans la membrane B permettent de relier les pistes anti-intrusion 2 de chacune des deux membranes A et B à l'aide de ponts traversants 6. Par souci de simplification, les couches de colle et/ou de vernis isolant ne sont pas représentées. Les pistes conductrices 2 des membranes A et B seront notamment placées au-dessus des contacts 9 décrits ci-dessous de manière à les protéger. Les membranes C et D comportent respectivement sur leurs faces inférieures et supérieures des éléments conducteurs 9 et des espaceurs 11 de manière à former des interrupteurs électriques permettant de réaliser la fonction de touches de clavier selon une technique connue, et décrite notamment dans la demande de brevet EP0727796. La membrane D sert aussi de support à l'afficheur 7 ; celui-ci sera éventuellement recouvert par une vitre (non représentée) insérée dans les ouvertures 10 des membranes A, B et C. Les pistes conductrices anti-intrusion 2 sont disposées aux abords immédiats de ces ouvertures 10 pour éviter toute intrusion à cet endroit. Enfin, la piste conductrice 2 placée sur la face inférieure de la membrane D est reliée par des ponts conducteurs 6, passant par des ponts conducteurs 4C et 4D, aux pistes 2 des membranes supérieures.

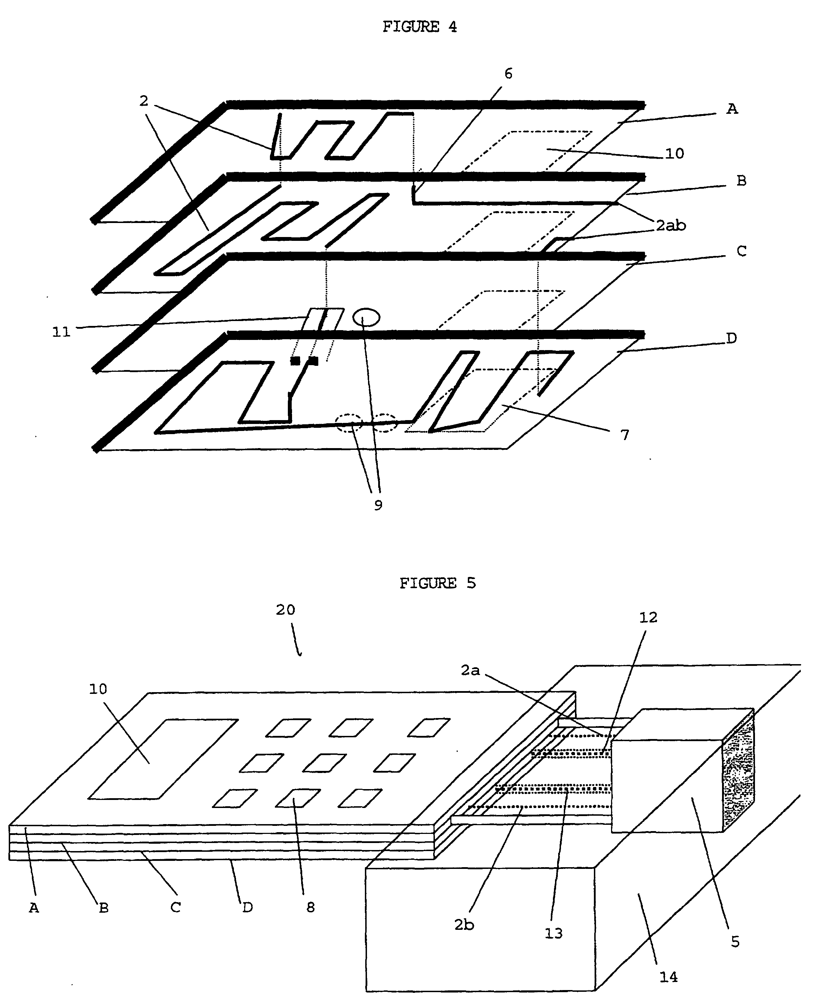

Ce même dispositif est représenté en perspective vue de dessous sur la figure 4. L'ensemble des pistes 2 présentes sur les faces inférieures des membranes A, B et D et des ponts 6 forme une barrière conductrice anti-intrusion en trois dimensions, protégeant les parties clavier et afficheur contre des attaques venant de toutes les directions. Cette barrière possède des caractéristiques électriques qui seront mesurées en permanence à partir de ses bornes 2a et 2b par un moyen 5 (non représenté) tel que décrit précédemment.

Un avantage de l'invention, illustré aux figures 3 et 4 provient donc du fait qu'il est possible d'intégrer au sein de la structure multicouche, et donc à l'intérieur de la barrière anti-intrusion des composants électroniques comme un clavier, des interrupteurs, des processeurs, des afficheurs... Cela permet de réaliser à faible coût toutes sortes de fonctions électroniques complètement protégées contre des intrusions venant de toute direction. De plus, l'utilisation de membranes souples de faible épaisseur permet une intégration facile dans tout appareil.

L'application suivante, représentée aux figures 5 et 6 est un exemple d'exploitation de ces avantages.

La figure 5 représente un dispositif 20 de saisie de code d'identification (code PIN) entièrement sécurisé avec le dispositif de l'invention tel que décrit aux figures 3 et 4. Il comporte une structure de quatre membranes, intégrant un afficheur et un clavier. Le clavier et l'afficheur sont liés au microprocesseur 5 par des circuits conducteurs 12 et 13 (représentés schématiquement) regroupés en nappe et protégés contre les fraudes par des pistes 2 (non représentées ici par souci de simplicité) jusqu'à leur connexion au microprocesseur 5. La connexion de la nappe (comportant les connexions 2a, 2b, 12 et 13) au microprocesseur 5 est noyée dans de la résine 14 pour assurer son inaccessibilité.

Ce dispositif de saisie de code d'identification est entièrement sécurisé puisqu'il comporte un clavier, un afficheur et un microprocesseur totalement dédiés et protégés contre la fraude.

Ce dispositif a aussi les avantages d'être fabriqué à faible coût et de représenter un faible encombrement.

La figure 6 représente schématiquement, pour faciliter l'explication des différentes fonctions, l'implantation d'un dispositif 20 du type précédent sur un ordinateur portable 30, de manière à lui ajouter une fonction de paiement par cartes entièrement sécurisée. L'ordinateur portable 30 possède sur sa face supérieure 31 un clavier 32 et un afficheur 33. Il peut être porté à l'aide d'une poignée amovible 34 et communique avec l'extérieur par une liaison série avec une connectique adaptée 35 permettant des échanges entre son processeur 36 et l'extérieur. On lui ajoute un lecteur de carte, intégré dans un compartiment autonome 37, étanche par rapport au reste de l'appareil 30. Sur la figure, une carte à puce 38 est insérée en position de lecture par la fente 39 du lecteur de cartes. Un dispositif 20 tel que décrit à la figure 5 est collé sur la face inférieure 40 de l'appareil, de manière à présenter un deuxième clavier 8 et afficheur 7 destinés à la saisie du code PIN. Le dispositif 20, placé sur la face inférieure, est protégé dans les modes habituels d'utilisation de l'ordinateur 30 par un couvercle amovible 41. L'appareil 30 est retourné et repose sur des points de support protubérants 42 prévus sur la face habituellement supérieure 31 lors de son utilisation comme terminal de paiement. Le dispositif 20 pénètre dans le compartiment 37 par l'intermédiaire d'une ouverture 43 puis la nappe de connexion électrique, comportant les connexions liées au fonctionnement du clavier, de l'afficheur et du treillis anti-intrusion, est connectée aux entrées du microprocesseur 5 qui va gérer la fonction de paiement. Ce dernier est capable de détecter une intrusion à travers le dispositif 20 et de réagir à cette intrusion. Une deuxième membrane anti-intrusion 1 telle que décrite à la figure 2a est utilisée pour protéger la partie supérieure de l'appareil, au niveau du compartiment 37. Elle est fixée à l'appareil 30 par collage sur la surface 31. La sécurité est renforcée par un interrupteur 44 de détection d'ouverture, rendu inaccessible par sa position sous le capot 45. Toutes les données confidentielles du paiement sont contenues dans le microprocesseur 5. Celui-ci est entouré par la membrane 1 pour le protéger. De plus, on prévoit de noyer ce microprocesseur et ses connexions avec les membranes 20 et 1 dans de la résine thermodurcissable 14 pour augmenter son inaccessibilité. Si cette résine est détériorée, il y a une forte probabilité de coupure de plusieurs pistes du système. Seule une ouverture étanche 46 est prévue entre le compartiment 37 et le reste de l'appareil pour l'alimentation du microprocesseur 5 et sa connexion avec le microprocesseur 36. Ces connexions sont aussi noyées dans la résine 14. Une alimentation supplémentaire (non représentée) est placée dans la zone protégée, dans la résine 14, pour rendre le dispositif anti-intrusion autonome et fonctionnel en cas de neutralisation de l'alimentation principale de l'appareil 30. Comme mesure de sécurité supplémentaire, on pourra prévoir un dispositif tel que décrit dans la demande de brevet WO00/01100 afin d'éviter la possibilité de récupérer des données confidentielles à partir de l'alimentation extérieure du microprocesseur 5.

Un des avantages du dispositif 20 selon l'invention est sa structure membranaire souple et fine qui facilite son placement sur toutes sortes de surface. Dans l'exemple de la figure 6, le placement du clavier et de l'afficheur pour le paiement sur la face arrière de l'appareil évite d'agrandir ou d'encombrer la surface avant ; la surface vierge est exploitée au mieux. Cela va dans le sens de la miniaturisation des appareils. En remarque, on notera que si le degré de sécurité optimal n'est pas recherché, il reste de nombreux avantages à réaliser ce même montage selon cette technologie multicouche en supprimant simplement le dispositif anti-intrusion 2.

Un autre avantage du dispositif 20 provient du fait qu'il peut s'ajouter à un appareil sans nuire à son étanchéité, comme cela est illustré dans l'exemple précédent (figure 6).

La figure 7a représente l'interrupteur 44 dans le cas d'un appareil en configuration normale de fonctionnement. Le dispositif anti-intrusion 1 compris entre le capot 45 et la surface supérieure 31 de l'appareil contient une languette 47 placée entre deux membranes A et B du dispositif 1, de manière à isoler deux contacts 48 placés en regard sur chaque membrane A et B. La languette 47 a été fixée au capot 45 ainsi qu'à la surface 31 par des harpons 49.

Une intrusion consistant à forcer l'appareil au niveau du capot 45 afin de le soulever aura pour effet d'arracher la languette 47 de la membrane 1, entraînant la mise en contact des contacts 48. De même, une tentative de décollage de la membrane de sécurité 1 aura le même effet : l'interrupteur passe de la position ouverte à la position fermée telle que représentée à la figure 7b. Ce nouveau circuit fermé pourra être détecté par le microprocesseur 5 et, de la même manière qu'avec le circuit 2, l'intrusion sera détectée.

Il faut noter que cet interrupteur, outre le fait qu'il se combine avec le dispositif de sécurité selon l'invention, présente de nombreux avantages : il est purement mécanique, il est ouvert en fonctionnement normal, ce qui évite l'usure entraînant l'oxydation des contacts par exemple, il est fabriqué à bas coût et il est peu encombrant.

La combinaison d'un tel interrupteur dans un dispositif de sécurité selon l'invention donne l'assurance de détecter les tentatives de décollage du dispositif de sécurité, ce qui est un grand avantage.

Pour résumer tous les avantages du dispositif optimal selon l'invention ainsi décrit et utilisé dans l'application de la figure 6, il faut noter qu'il permet de détecter les types suivants d'intrusion :
- Pénétration dans la paroi avec un objet coupant,
- Délaminage de la paroi,
- Arrachement de la membrane de sécurité 1,
- Ouverture du corps de l'appareil.

La figure 8a représente une carte à puce 50 en perspective disposant d'un dispositif anti-intrusion selon l'invention. Ce dispositif selon l'invention tel que décrit précédemment permet notamment de protéger la liaison entre la puce (non représentée) et les contacts 51. De plus, un avantage de l'invention est de pouvoir ajouter à la carte à puce 50 de nouvelles fonctionnalités totalement sécurisées contre les fraudes comme un afficheur 52 et un clavier 53. La puce remplira la fonction de moyen de mesure 5. On pourra prévoir une source d'énergie pour le fonctionnement de ces nouvelles fonctions.

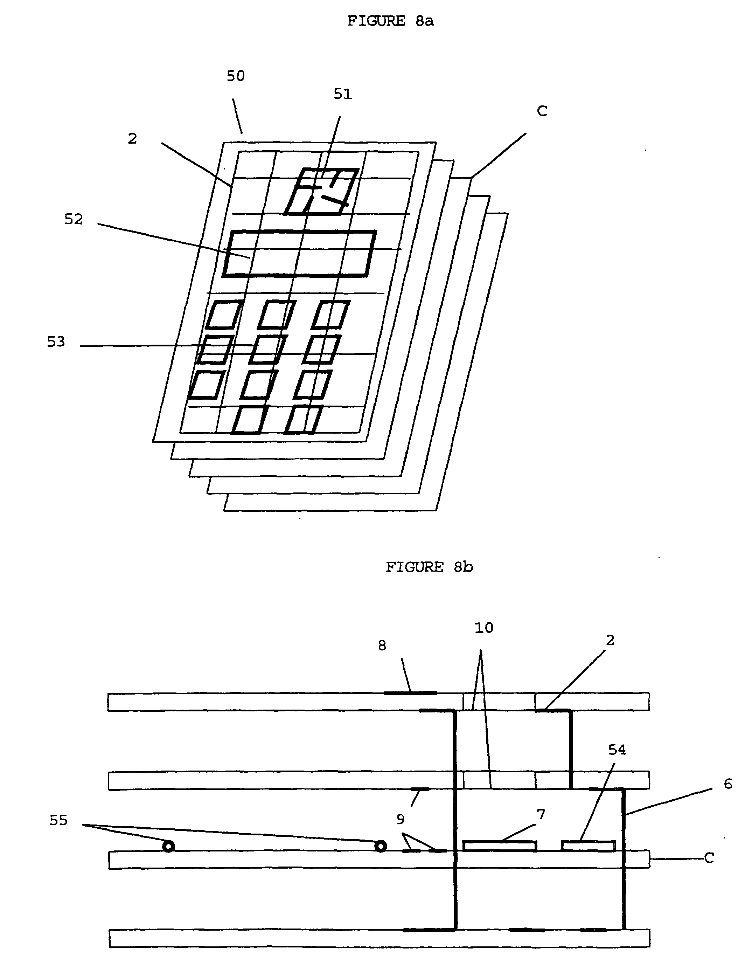

La figure 8b montre une carte à puce incorporant un dispositif selon l'invention en coupe. Contrairement à la figure 8a, il s'agit ici d'une carte à puce sans contact, comportant une antenne 55. De manière à ne pas interférer avec l'antenne, la barrière anti-intrusion 2 n'est utilisée que sur une partie de la carte hors de l'antenne, de manière à protéger la puce 54, un afficheur 7 et un clavier 9. On peut aussi imaginer un clavier dans le champ de l'antenne, qui comprendrait des moyens tels que décrit dans la demande FR2736451 pour éviter les interférences entre le clavier et l'antenne.

On notera que le dispositif de sécurité selon l'invention occupe tout ou partie de l'épaisseur et de la surface d'une carte à puce. Il est de préférence mis en oeuvre à la fabrication de la carte. Cependant, il peut aussi être ajouté par la suite sur une carte classique de façon à recouvrir la carte pour la protéger. Pour des cartes à puce classiques à contact, utilisées comme cartes téléphoniques, il pourra servir à protéger la puce contre les intrusions pour éviter de nombreuses fraudes qui consistent à connecter des puces indésirables sur la puce initiale, dans l'épaisseur de la carte d'une manière indétectable à l'oeil nu.

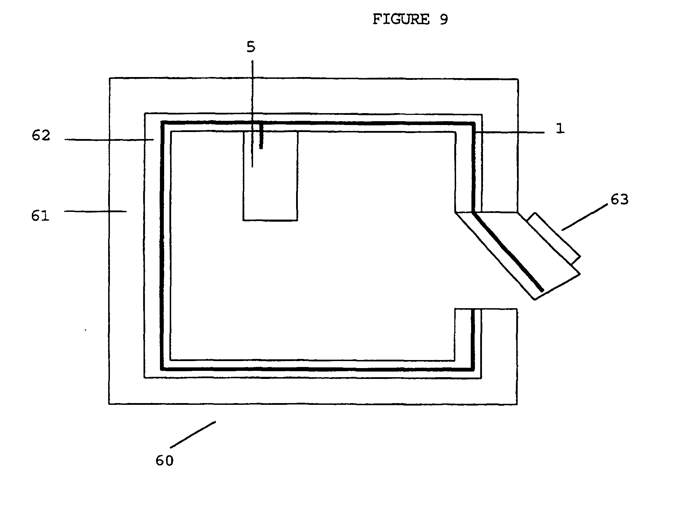

La figure 9 représente un coffre-fort 60 incorporant un dispositif anti-intrusion 1 selon la présente invention. Sa paroi comporte une première épaisseur 61 en acier puis une seconde 62 en résine dure. Dans cette dernière est placée une enveloppe anti-intrusion 1 selon la présente invention, couvrant toute la surface extérieure du coffre-fort 60. La porte 63 s'ouvre à l'aide d'un code confidentiel tapé sur un clavier multicouche protégé par un dispositif selon l'invention tel que celui représenté à la figure 3. Un microprocesseur 5, disposé à l'intérieur du coffre-fort détecte toute intrusion à travers les membranes anti-intrusion.

Tous ces exemples illustrent les nombreuses applications possibles du dispositif de sécurité selon l'invention.

Ce dispositif a été représenté à l'aide de structures membranaires parce que les membranes offrent de nombreux avantages comme il a été vu mais il est possible d'appliquer le principe de l'invention à des supports de nature différente comme des parois classiques d'appareil ou de combiner dans une structure multicouche des membranes et d'autres matériaux.

Les pistes conductrices sur les membranes ont été réalisées sur les faces inférieures de celles-ci ; elles peuvent l'être de même sur les faces supérieures. Une seule membrane peut posséder une piste conductrice 2 sur chacune de ses deux faces, et posséder ou non des ponts traversants 6 pour relier ces deux pistes.

Le dispositif peut être réalisé à l'aide de couches très fines : 0.08 mm, ou moins si nécessaire. Il peut ainsi occuper un emplacement très réduit et être très souple. Il peut aussi être plus épais si la solidité et sa rigidité sont nécessaires. Il est possible d'utiliser divers matériaux suivant le rapport qualité/prix recherché. Par exemple, des films polyester, polyuréthane.

L'encre conductrice utilisée peut être à base de polymères contenant des particules conductrices en métal (argent, or) ou du carbone.

De tels circuits 2 peuvent être réalisés avec des substrats en Kapton comportant des pistes dorées. Cette dernière technologie possède, bien que plus chère d'excellentes caractéristiques électroniques et mécaniques.

Bien sûr, plusieurs pistes 2 non reliées entre elles peuvent se cumuler, soit sur une même surface, soit sur des surfaces différentes. On peut cumuler plusieurs barrières tridimensionnelles indépendantes. Dans tous ces cas, il y aura alors plusieurs bornes 2a et 2b à surveiller.

Le dispositif de sécurité peut aussi baser sa détection de détérioration des pistes, sur d'autres caractéristiques électriques que la résistance, par exemple des variations de capacité.

Un tel dispositif se combine à tout système de saisie d'identification, que ce soit la saisie d'un code PIN comme nous l'avons vu mais aussi la saisie d'une empreinte biométrique, une saisie optique ou vocale, etc.

Il s'adapte facilement sur tout appareil électronique, ordinateur portable ou téléphone portable. Il peut aussi être employé en remplacement des fonctions « clavier, afficheur, microprocesseur, etc. » utilisées habituellement dans ces appareils. Un seul clavier peut alors cumuler les fonctions de sécurité avec ses autres fonctions habituelles.

Toutes sortes de circuits complexes peuvent être intégrées dans la structure multicouche sécurisée. Bien que nous n'ayons représenté que des claviers et afficheurs, il est possible d'ajouter des batteries, des processeurs, etc.

Pour former un clavier plus ergonomique et conserver les avantages de la solution, on pourra recouvrir le clavier tel que décrit à la figure 3 de touches simulant les pistons habituels et créant une sensation plus agréable au touché.

## Revendications

1. Dispositif anti-intrusion (1) comprenant un circuit conducteur (2) placé sur une surface à protéger elle-même disposée sur un élément à protéger et un moyen (5) de mesure d'une caractéristique électrique associée audit circuit conducteur et apte à réagir en cas de modifications desdites caractéristiques électriques dans lequel le circuit conducteur (2) est en partie ou en totalité appliqué sur une membrane souple destinée à être fixée à la surface à protéger, **caractérisé en ce qu'**il comprend des contacts (48) et une languette isolante (47) attachée solidement audit élément à protéger par l'une de ses extrémités et dont l'autre extrémité peut occuper deux positions, la première intercalée entre lesdits contacts (48) et la deuxième hors desdits contacts (48) de manière à former un interrupteur (44) apte à détecter la séparation dudit dispositif anti-intrusion et dudit élément à protéger.

2. Dispositif anti-intrusion selon la revendication 1, **caractérisé en ce que** ledit circuit conducteur (2) est réalisé à l'encre conductrice.

3. Dispositif anti-intrusion selon la revendication 1, **caractérisé en ce que** le circuit conducteur (2) comprend un premier élément de circuit conducteur placé sur la surface à protéger et un deuxième élément de circuit conducteur placé au-dessus dudit premier élément et séparé de celui-ci par une couche isolante munie d'un pont conducteur (6) reliant électriquement les deux éléments de circuit conducteur.

4. Dispositif anti-intrusion selon les revendications 1 et 3, **caractérisé en ce que** le dispositif anti-intrusion comprend deux membranes souples solidaires l'une de l'autre contenant chacune un élément de circuit conducteur (2) sur une de leur face, et comprenant un pont conducteur (6) pour effectuer une connexion électrique entre lesdits éléments de circuits de chacune des deux membranes.

5. Dispositif anti-intrusion selon la revendication 4, **caractérisé en ce que** le dispositif anti-intrusion est composé de plusieurs membranes souples de faible épaisseur comprenant des pistes conductrices sérigraphiées reliées entre elles par des ponts conducteurs (6) réalisés à travers lesdites membranes de manière à former l'apparence d'une membrane souple unique, comprenant une barrière conductrice anti-intrusion tridimensionnelle.

6. Dispositif anti-intrusion selon l'une des revendications précédentes, **caractérisé en ce que** le moyen (5) de mesure d'une caractéristique électrique est placé à l'intérieur d'un volume au moins en partie protégé par le circuit conducteur (2).

7. Dispositif anti-intrusion selon l'une des revendications précédentes, **caractérisé en ce qu'**il comprend une alimentation électrique placée à l'intérieur d'un volume au moins en partie protégé par le circuit conducteur (2) .

8. Dispositif anti-intrusion selon la revendication 4 ou 5, **caractérisé en ce qu'**il contient un composant tel qu'un interrupteur (9), un afficheur (7) ou un microprocesseur (54) entre deux membranes souples.

9. Dispositif anti-intrusion selon la revendication 4 ou 5, **caractérisé en ce qu'**il comprend un moyen de saisie d'identification (9) et un afficheur (7) protégés par une barrière conductrice de protection et reliés à un moyen de gestion des fonctions de vérification d'identité placé à l'intérieur d'un volume protégé.

10. Dispositif anti-intrusion selon la revendication 9 placé sur un appareil (30), **caractérisé en ce que** le moyen de saisie d'identification (9) est placé sur la face inférieure (40) dudit appareil (30).

11. Carte à puce **caractérisée en ce qu'**elle comporte un dispositif selon l'une quelconque des revendications 1 à 5.

12. Coffre-fort **caractérisé en ce qu'**il comporte un dispositif selon l'une quelconque des revendications 1 à 5.

13. Dispositif de saisie de code confidentiel comprenant un système anti-intrusion selon la revendication 5, **caractérisé en ce qu'**il comprend une première membrane comportant une première piste conductrice anti-intrusion, une deuxième membrane comportant une seconde piste conductrice anti-intrusion reliée électriquement à ladite première piste anti-intrusion par un pont conducteur (6), un clavier membranaire dont les contacts sont placés en zone protégée entre lesdites pistes conductrices anti-intrusion.

## Patentansprüche

1. Anti-Eindringvorrichtung (1), die Folgendes aufweist: eine leitende Schaltung (2), die auf eine zu schützende Oberfläche platziert wird, die selbst auf einem zu schützenden Element angeordnet ist, und Mittel (5) zum Messen einer elektrischen Charakteristik, die mit der leitenden Schaltung assoziiert ist, und die in der Lage ist zu reagieren im Fall von Modifikationen der elektrischen Charakteristik, wobei die leitende Schaltung (2) teilweise oder vollständig auf einer flexiblen Membran angelegt ist, die auf der zu schützenden Oberfläche fixiert werden soll, **dadurch gekennzeichnet, dass** sie Kontakte (48) und eine Isolierzunge (47) aufweist, die an einem ihrer Enden fest an dem zu schützenden Element befestigt ist, und deren anderes Ende zwei Positionen einnehmen kann, wobei die erste zwischen den Kontakten (48) und die zweite außerhalb der Kontakte (48) liegt, um einen Schalter (44) zu bilden, der in der Lage ist, die Trennung der Anti-Eindringvorrichtung und des zu schützenden Elements zu detektieren.

2. Anti-Eindringvorrichtung nach Anspruch 1, **dadurch gekennzeichnet, dass** die leitende Schaltung (2) mit leitender Tinte ausgebildet ist.

3. Anti-Eindringvorrichtung nach Anspruch 1, **dadurch gekennzeichnet, dass** die leitende Schaltung (2) ein erstes leitendes Schaltungselement aufweist, das auf die zu schützende Oberfläche platziert ist, und ein zweites leitendes Schaltungselement, das über dem ersten Element platziert ist, und davon durch eine isolierende Schicht getrennt ist, die mit einer leitenden Brücke (6) versehen ist, die die zwei leitenden Schaltungselemente elektrisch verbindet.

4. Anti-Eindringvorrichtung nach den Ansprüchen 1 und 3, **dadurch gekennzeichnet, dass** die Anti-Eindringvorrichtung zwei flexible Membranen aufweist, die unbewegbar aneinander befestigt sind, wobei jede ein leitendes Schaltungselement (2) auf einer ihrer Oberflächen besitzt, und eine leitende Brücke (6) zum Herstellen einer elektrischen Verbindung zwischen den Schaltungselementen jeder der zwei Membranen.

5. Anti-Eindringvorrichtung nach Anspruch 4, **dadurch gekennzeichnet, dass** die Anti-Eindringvorrichtung aus mehreren flexiblen Membranen mit geringer Dicke ausgebildet ist, welche im Siebdruckverfahren hergestellte leitende Membranen aufweisen, die durch leitende Brücken (6) miteinander verbunden sind, die durch die Membrane hindurch ausgebildet sind, um den Eindruck einer einzelnen flexiblen Membran vorzusehen, die eine dreidimensionale Anti-Eindringleitbarriere besitzt.

6. Anti-Eindringvorrichtung nach einem der vorhergehenden Ansprüche, **dadurch gekennzeichnet, dass** die Mittel (5) zum Messen einer elektrischen Charakteristik innerhalb eines Volumens platziert sind, das wenigstens teilweise durch die leitende Schaltung (2) geschützt ist.

7. Anti-Eindringvorrichtung nach einem der vorhergehenden Ansprüche, **dadurch gekennzeichnet, dass** sie eine elektrische Energieversorgung aufweist, die innerhalb eines wenigstens teilweise durch die leitende Schaltung (2) geschützten Volumens platziert ist.

8. Anti-Eindringvorrichtung nach Anspruch 4 oder 5, **dadurch gekennzeichnet, dass** sie eine Komponente, wie beispielsweise einen Schalter (9), eine Anzeige (7) oder einen Mikroprozessor (54) zwischen zwei flexiblen Membranen aufweist.

9. Anti-Eindringvorrichtung nach Anspruch 4 oder 5, **dadurch gekennzeichnet, dass** sie Identifikationseingabemittel (9) und eine Anzeige (7) aufweist, die durch eine leitende Schutzbarriere geschützt sind, und die mit Mitteln verbunden sind zum Durchführen bzw. Managen der Identitätsüberprüfungsfunktionen, innerhalb eines geschützten Volumens.

10. Anti-Eindringvorrichtung nach Anspruch 9, die auf einer Vorrichtung (30) platziert ist, **dadurch gekennzeichnet, dass** die Identifikationseingabemittel (9) an der Unterseite (40) der Einrichtung (30) platziert sind.

11. Eine Smart-Card, **dadurch gekennzeichnet, dass** sie die Vorrichtung nach einem der Ansprüche 1 bis 5 aufweist.

12. Ein Safe, **dadurch gekennzeichnet, dass** er die Einrichtung nach einem der Ansprüche 1 bis 5 aufweist.

13. Eine Geheimcode-Eingabevorrichtung, die das Anti-Eindringsystem nach Anspruch 5 aufweist, **dadurch gekennzeichnet, dass** sie Folgendes aufweist: eine erste Membran mit einer ersten leitenden Anti-Eindringbahn, eine zweite Membran, die eine zweite leitende Eindringbahn aufweist, die elektrisch mit der ersten Anti-Eindringbahn über eine leitende Brücke (6) verbunden ist, eine Membrantastatur deren Kontakte in dem geschützten Bereich zwischen den leitenden Anti-Eindringbahnen platziert sind.

## Claims

1. An anti-intrusion device (1) comprising a conductive circuit (2) placed on a surface to be protected, itself arranged on an element to be protected, and means (5) for measuring an electrical characteristic associated with said conductive circuit and capable of reacting in case of modifications of said electrical characteristics, in which the conductive circuit (2) is partly or totally applied on a flexible membrane intended to be fixed on the surface to be protected, **characterized in that** it comprises contacts (48) and an isolating tongue (47) firmly attached to said element to be protected by one of its ends and the other end of which can occupy two positions, the first one interposed between said contacts (48) and the second one outside of said contacts (48) to form a switch (44) capable of detecting the separation of said anti-intrusion device and of said element to be protected.

2. The anti-intrusion device of claim 1, **characterized in that** said conductive circuit (2) is formed with conductive ink.

3. The anti-intrusion device of claim 1, **characterized in that** the conductive circuit (2) comprises a first conductive circuit element placed on the surface to be protected and a second conductive circuit element placed above said first element and separated therefrom by an insulating layer provided with a conductive bridge (6) electrically connecting the two conductive circuit elements.

4. The anti-intrusion device of claims 1 and 3, **characterized in that** the anti-intrusion device comprises two flexible membranes immovably attached together, each containing a conductive circuit element (2) on one of its surfaces and comprising a conductive bridge (6) to perform an electrical connection between said circuit elements of each of the two membranes.

5. The anti-intrusion device of claim 4, **characterized in that** the anti-intrusion device is formed of several flexible membranes of small thickness comprising silk-screened conductive tracks interconnected by conductive bridges (6) formed through said membranes to provide the appearance of a single flexible membrane, comprising a three-dimensional anti-intrusion conductive barrier.

6. The anti-intrusion device of any of the foregoing claims, **characterized in that** the means (5) for measuring an electric characteristic are placed within a volume at least partly protected by the conductive circuit (2).

7. The anti-intrusion device of any of the foregoing claims; **characterized in that** it comprises an electric power supply placed within a volume at least partly protected by the conductive circuit (2).

8. The anti-intrusion device of claim 4 or 5, **characterized in that** it contains a component such as a switch (9), a display (7), or a microprocessor (54) between two flexible membranes.

9. The anti-intrusion device of claim 4 or 5, **characterized in that** it comprises identification input means (9) and a display (7) protected by a conductive protection barrier and connected to means for managing the identity check functions placed within a protected volume.

10. The anti-intrusion device of claim 9 placed on a device (30), **characterized in that** the identification input means (9) are placed on the lower surface (40) of said device (30).

11. A smart card **characterized in that** it comprises the device of any of claims 1 to 5.

12. A safe **characterized in that** it comprises the device of any of claims 1 to 5.

13. A confidential code input device comprising the anti-intrusion system of claim 5, **characterized in that** it comprises a first membrane.comprising a first conductive anti-intrusion track, a second membrane comprising a second conductive anti-intrusion track electrically connected to said first anti-intrusion track by a conductive bridge (6), a membrane keyboard having its contacts placed in the protected area between said conductive anti-intrusion tracks.
